**Europäisches Patentamt**

**European Patent Office**

**Office européen des brevets**

(19)

(11) Veröffentlichungsnummer: **0 254 907**
**B1**

(12)

# EUROPÄISCHE PATENTSCHRIFT

(45) Veröffentlichungstag der Patentschrift:
**18.10.89**

(21) Anmeldenummer: **87109634.3**

(22) Anmeldetag: **04.07.87**

(51) Int. Cl.⁴: **B01D 29/00, C25B 1/34,**
**C25B 15/08**

(54) **Filtereinsatz für ein Kelly-Filter.**

(30) Priorität: **18.07.86 DE 3624424**

(43) Veröffentlichungstag der Anmeldung:
**03.02.88 Patentblatt 88/5**

(45) Bekanntmachung des Hinweises auf die Patenterteilung:
**18.10.89 Patentblatt 89/42**

(84) Benannte Vertragsstaaten:
**AT BE CH DE ES FR GB GR IT LI NL SE**

(56) Entgegenhaltungen:
**DD-A- 76 667**

**ULLMANNS ENCYKLOPÄDIE DER TECHNISCHEN CHEMIE, 3.Auflage,1.Band, 1951 URBAN & SCHWARZENBERG "Chemischer Apparatebau und Verfahrenstechnik" München-Berlin, Seiten 500,501**

(73) Patentinhaber: **HÜLS AKTIENGESELLSCHAFT, Paul-Baumann-Strasse 1, D-4370 Marl 1(DE)**
Patentinhaber: **Heraeus Elektroden GmbH, Heraeusstrasse 12 - 14, D-6450 Hanau/Main(DE)**

(72) Erfinder: **Kotowski, Stephan, Dr., Stadtgraben 12, D-6453 Seligenstadt(DE)**
Erfinder: **Heinke, Harri, Feldstrasse 4, D-6455 Erlensee(DE)**
Erfinder: **Exner, Hans, Porzer Strasse 11, D-5216 Niederkassel 3(DE)**
Erfinder: **Schmittinger, Peter, Dr., Germanenstrasse 42, D-5216 Niederkassel 6(DE)**
Erfinder: **Wilmen, Günther, Rodenkirchener Strasse 28, D-5938 Hochkirchen bei Köln(DE)**

(74) Vertreter: **Heinen, Gerhard, Dr., Heraeus Holding GmbH Heraeusstrasse 12-14, D-6450 Hanau am Main(DE)**

**Beschreibung**

"Die Erfindung betrifft einen von einem Filtertuch umschlossenen Filtereinsatz für ein Kelly-Filter, der wenigstens einen die Kanten einer Filterfläche ganz oder teilweise umspannenden Filterrahmen mit näherungsweise U-förmigen Querschnitt aufweist, wobei innerhalb des Filterrahmens wenigstens ein Einbau vorgesehen ist, welcher zum Filtertuch hin offene Kanäle zwecks Ableitung des Filtrats in den Filterrahmen enthält und wobei der Filterrahmen wenigstens einen durch eine Öffnung im Filtertuch herausgeführten Flüssigkeitsauslaß enthält.

In der Alkalichloridelektrolyse können Verunreinigungen in der Sole zu erheblichen Störungen des Eletrolysebetriebes führen. Die ausgefällten Verunreinigungen werden durch Filtration abgeschieden. Zur Filtration von Sole, die zur Chlor- und Alkalilaugeerzeugung benötigt wird, werden häufig sogenannte Kelly-Filter benutzt, die aus einem Druckkessel bestehen, deren eingehängte Filterrahmen mit Tüchern bespannt sind. Die eigentlichen Filterrahmen bestehen dabei meist aus gummiertem Stahl. Die trübe Sole wird unter Druck in den Kessel gepumpt, die Trübstoffe setzen sich auf dem Filtertuch, das über den Filterrahmen gezogen ist, ab. Die Sole gelangt durch das Tuch in den Filterrahmen und wird als klare Lösung durch die Kesselwand nach außen geführt. Ein solches Kelly-Filter ist in Ullmanns Enzyklopädie der Technischen Chemie, 4. Auflage, Band 9, Seite 339, Verlag Chemie, Weinheim/Bergstraße, 1975 beschrieben.

Als nachteilig erweist sich, daß die Kapazität eines solchen Filters, d.h. die Menge Sole, die pro Zeit filtriert werden kann, dadurch begrenzt wird, daß die Trübstoffe im Laufe der Zeit das Filtertuch zusetzen und einen weiteren Durchfluß behindern. Es ist nicht möglich, durch Erhöhung des Filterdrucks - bis an die Betriebsgrenze des Kessels - die Durchflußmenge in nennenswerter Weise zu steigern. Das Filter muß dann gereinigt werden.

Die Erfindung stellt sich die Aufgabe, die Kapazität eines Kelly-Filters durch Oberflächenvergrößerung der Filterfläche zu steigern; dabei soll insbesondere die Kapazität existierender Kelly-Filter durch Austausch der bisher benutzten Filterrahmen gegen Filter-Einsätze größerer Filterfläche erhöht werden, wobei die äußeren Abmessungen des Einsatzes nicht wesentlich größer - bezüglich der Dicke - bevorzugt kleiner als die äußeren Abmessungen des zu ersetzenden Rahmens sind.

Die Aufgabe wird dadurch gelöst, daß als Material des Filterrahmens chemisch und elektrochemisch korrosionsbeständiges Blech vorgesehen ist, daß wenigstens zwei Filterrahmen von im wesentlichen gleicher Größe, die zueinander angenähert parallel angeordnet und mechanisch miteinander verbunden sind, einen gemeinsamen Filtereinsatz bilden, wobei die Filterrahmen wenigstens einen gemeinsamen Flüssigkeitsauslaß aufweisen.

In einer bevorzugten Ausführungsform wird als Material für den Filterrahmen Titan eingesetzt. Weitere bevorzugte Ausführungsmerkmale sind den Ansprüchen 2 bis 5 zu entnehmen.

Der wesentliche Vorteil der Erfindung ist darin zu sehen, daß die Verwendung von korrosionsbeständigem Blech an Stelle des bisher üblicherweise verwendeten gummierten Stahls eine verhältnismäßig schlanke Konstruktion des Rahmens und der Einbauten erlaubt, wodurch die Dicke des erfindungsgemäßen Filtereinsatzes, die des zu ersetzenden Rahmens nicht wesentlich überschreitet eher unterschreitet. Es ist somit eine verhältnismäßig einfache Anpassung des als Doppelfilter wirkenden Filtereinsatzes an die vorgegebenen Ausmaße des bestehenden Kelly-Filters möglich. Auf diese Weise lassen sich bereits bestehende Kelly-Filter ohne irgendwelche nachträglichem Umbauten auf einfache Weise durch Austausch der Filtereinsätze verbessern.

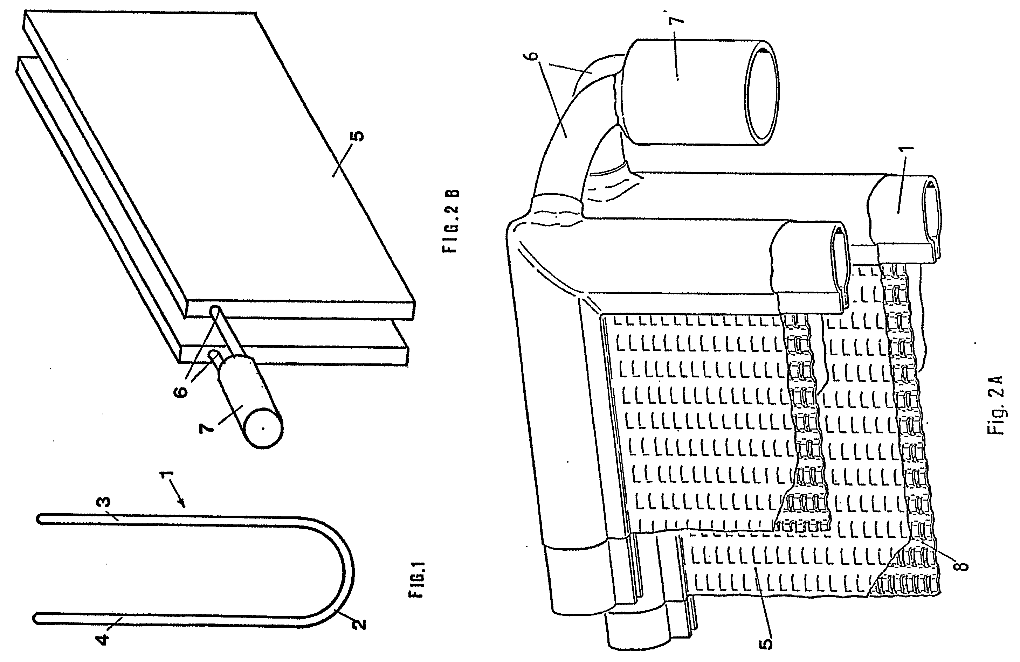

Im folgenden ist der Gegenstand der Erfindung anhand der Figuren 1 und 2 näher erläutert.

In Figur 1 ist das Profil des U-förmigen Titan-Rahmens dargestellt, während Figur 2a im Ausschnitt einen erfindungsgemäßen Filtereinsatz zeigt; Figur 2b zeigt schematisch den gesamten Filtereinsatz.

Gemäß Figur 1 besteht der Filterrahmen 1 aus einem etwa 2 mm starken Titanblech, das zu einem angenähert U-förmigen Profil gebogen ist. Der äußere konvex gebogene Teil 2 des Rahmens 1 bildet gleichzeitig eine Auflagefläche für das hier zwecks besserer Übersicht nicht dargestellte Filtertuch. Die lichte Weite der beiden parallelen Rahmenteile 3 und 4 bildet den Kanalquerschnitt für die Flüssigkeit. Durch den Einsatz von Titanblech anstelle des üblicherweise benutzten Stahlprofils mit Gummierung ist es möglich, die äußeren Abmessungen des Filterrahmens fast auf die Größe des Kanalquerschnitts zu reduzieren.

Der in Figur 2A dargestellte Filtereinsatz enthält zwei erfindungsgemäße Filterrahmen 1. Zwecks besserer Übersicht ist nur ein Teilausschnitt der Einbauten 8 mit ihren zum Filtertuch hin offenen Kanälen zwecks Ableitung des Filtrats dargestellt, wobei Teile des dargestellten Filtertuches zwecks besserer Erkennbarkeit des Rahmens mit Öffnungen gezeigt werden. Nach dieser Figur sind die beiden mit Filtertuch 5 bespannten Filterrahmen 1 zueinander parallel mit Zwischenraum angeordnet, so daß die zu filternde Flüssigkeit durch alle vier Filterflächen dieses Filtereinsatzes eintreten kann. Im oberen Teil des senkrecht verlaufenden Profils der Vorderkante sind die äußeren Teile 2 der Profilrahmen 1 jeweils mit einem rohrförmigen Flüssigkeitsauslaß 6 versehen, welcher in einem gemeinsamen Flüssigkeitsauslaß 7 mündet.

Die beiden Filterrahmen 1 sind somit durch die gemeinsame Rohrleitung mechanisch fest miteinander verbunden. Der Abstand zwischen den beiden Filterrahmen 1 wird so eingestellt, daß der Doppelfilterrahmen in seinen äußeren Abmessungen dem Aufnahmebereich für übliche Filtereinsätze des Kelly-Filters entspricht. Der gemeinsame Flüssigkeitsauslaß 7 kann mit den beiden Flüssigkeitsauslässen 6 verschweißt oder verflanscht weren. Er kann ohne weitere Umbauten des Kessels durch den alten Ausfluß geführt werden. Es ist jedoch auch möglich, nach Umbauten des Kessels beide Flüssigkeitsauslässe 6 getrennt nach außen zu führen.

Figur 2b zeigt in einer schematischen Darstellung den mit Filtertuch 5 versehenen Filtereinsatz, wobei die Flüssigkeitsauslässe 6 beider Rahmen durch den gemeinsamen Flüssigkeitsauslaß 7 mechanisch fest miteinander verbunden sind.

In der Praxis hat es sich herausgestellt, daß zwischen Blechstärke des Rahmenprofils und der lichten Weite des Kanalquerschnitts ein Verhältnis im Bereich von 1 : 8 bis 1 : 15 als optimal anzusehen ist. Im vorliegenden Ausführungsbeispiel hat sich ein Verhältnis von Titanblechstärke zu Kanalweite von 1 : 11 als besonders zweckmäßig erwiesen.

Es ist selbstverständlich auch möglich, als Material für den Filterrahmen außer Titan auch andere Ventilmetalle ode Legierungen einzusetzen, doch wird Titan als preiswertestes Material, das noch korrosionsfest genug ist, vorzugsweise eingesetzt.

Die Funktionsweise des erfindungsgemäßen Filter unterscheidet sich in keiner Weise von einem herkömmlichen Filter der doppelten Größe, so daß die angestrebte Verdoppelung der Filterkapazität erreicht ist.

**Patentansprüche**

1. Von einem Filtertuch umschlossener Filtereinsatz für ein Kelly-Filter, der wenigstens einen die Kanten einer Filterfläche ganz oder teilweise umspannenden Filterrahmen mit näherungsweise U-förmigem Querschnitt aufweist, wobei innerhalb des Filterrahmens wenigstens ein Einbau vorgesehen ist, welcher zum Filtertuch hin offene Kanäle zwecks Ableitung des Filtrats in den Filterrahmen enthält und wobei der Filterrahmen wenigstens einen durch eine Öffnung im Filtertuch herausgeführten Flüssigkeitsauslaß (6) enthält, dadurch gekennzeichnet, daß als Material des Filterrahmens (1) chemisch und elektrochemisch korrosionsbeständiges Blech vorgesehen ist, daß wenigstens zwei Filterrahmen (1) von im wesentlichen gleicher Größe, die zueinander angenähert parallel angeordnet und mechanisch miteinander verbunden sind, einen gemeinsamen Filtereinsatz bilden, wobei die Filterrahmen (1) wenigstens einen gemeinsamen Flüssigkeitsauslaß (7) aufweisen.

2. Filtereinsatz nach Anspruch 1, dadurch gekennzeichnet, daß die Verbindung der Filterrahmen (1) aus dem gemeinsamen Flüssigkeitsauslaß (7) besteht.

3. Filtereinsatz nach einem der Ansprüche 1 oder 2, dadurch gekennzeichnet, daß Filterrahmen (1), Einbau (8) und Flüssigkeitsauslaß (6) aus Titan oder einer Titanlegierung bestehen.

4. Filtereinsatz nach einem der vorangehenden Ansprüche, dadurch gekennzeichnet, daß die miteinander verbundenen Filterrahmen (1) am Boden des Kelly-Filters in zueinander parallelen Nuten eingesetzt und gehalten sind.

5. Verwendung von Filtereinsätzen nach einem der vorangehenden Ansprüche zur Solefiltration der Alkalichloridelektrolyse.

**Revendications**

1. Cartouche filtrante entourée par une toile filtrante pour un filtre Kelly, qui présente au moins un cadre de filtre s'étendant totalement ou partiellement autour des bords d'une surface filtrante et ayant une section droite approximativement en U, avec prévison à l'intérieur du cadre d'au moins un élément incorporé contenant des canaux s'ouvrant vers la toile filtrante en vue de l'évacuation du filtrat dans le cadre, lequel comporte au moins une sortie de liquide (6) s'étendant à l'extérieur à travers une ouverture de la toile filtrante, caractérisée en ce que le matériau du cadre (1) est de la tôle résistante à la corrosion chimique et électrochimique et qu'au moins deux cadres (1) ayant sensiblement la même grandeur, qui sont disposés à peu près parallèlement et reliés mécaniquement entre eux, forment ensemble une cartouche filtrante et possèdent au moins une sortie de liquide commune (7).

2. Cartouche selon la revendication 1, caractérisée en ce que la liaison entre les cadres (1) est formée par la sortie de liquide commune (7).

3. Cartouche selon la revendication 1 ou 2, caractérisée en ce que le cadre (1), l'élément incorporé (8) et la sortie de liquide (6) de chaque cadre sont en titane ou alliage de titane.

4. Cartouche selon une des revendications précédentes, caractérisée en ce que les cadres (1) assemblés sont disposés et maintenus dans des rainures parallèles ménagées dans le fond du filtre Kelly.

5. Utilisation de cartouches filtrantes selon une des revendications précédentes pour la filtration de saumure de l'électrolyse de chlorure alcalin.

**Claims**

1. A filter insert enclosed by a filter cloth for a Kelly filter, which comprises at least one filter frame with an approximately U-shaped cross-section wholly or partly enflanking the edges of a filter surface, wherein at least one insert is provided within the filter frame which contains passages open towards the filter cloth for ducting off the filtrate into the filter frame and wherein the filter frame contains at least one liquid outlet (6) led out through an opening in the filter cloth, characterized in that sheet material resistant to chemical and electrochemical corrosion is provided as a material for the filter frame (1), that at least two filter frames (1) of substantially the same size, which are arranged approximately mutually parallel and are mechanically interconnected, form a joint filter insert, the filter frames (1) having at least one common liquid outlet (7).

2. A filter insert according to claim 1, characterized in that the connection of the filter frames (1) is formed by the common liquid outlet (7).

3. A filter insert according to one of claims 1 or 2, characterized in that the filter frame (1), insert (8) and liquid outlet (6) are made from titanium or a titanium alloy.

4. A filter insert according to one of the preceding claims, characterized in that the interconnected filter frames (1) are inset and secured in mutually parallel grooves in the base of the Kelly filter.

5. Use of filter inserts according to one of the preceding claims for brine filtration in chloralkali electrolysis.

FIG.1

FIG.2 B

Fig. 2 A